# EUROPÄISCHE PATENTSCHRIFT

(11) **EP 4 494 838 B1**
(45) Veröffentlichungstag und Bekanntmachung des Hinweises auf die Patenterteilung: **25.02.2026**
(21) Anmeldenummer: 24176308.5
(22) Anmeldetag: 16.05.2024
(51) Int. Cl.: B29C 49/42

(54) **KOPPELUNG VON HERSTELLUNGSMASCHINE UND STRECKBLASMASCHINE ÜBER LUFTTRANSPORT**
COUPLING OF PRODUCTION MACHINE AND STRETCH BLOW MOLDING MACHINE BY MEANS OF AIR TRANSPORT
DISPOSITIF D'ACCOUPLEMENT D'UNE MACHINE DE FABRICATION ET MACHINE D'ÉTIRAGE-SOUFFLAGE PAR TRANSPORT D'AIR

(30) Priorität: 19.07.2023 DE 102023119038
(43) Veröffentlichungstag der Anmeldung: 22.01.2025
(73) Patentinhaber: Krones AG, 93073 Neutraubling (DE)
(72) Erfinder: Wuensche, Dieter, 93073 Neutraubling (DE); Geltinger, Florian, 93073 Neutraubling (DE)
(74) Vertreter: Grünecker Patent- und Rechtsanwälte PartG mbB

(56) Entgegenhaltungen:
- JP-A- 2023 061 898
- JP-A- H0 957 824
- US-A1- 2012 126 456
- US-A1- 2020 290 260
- US-B2- 6 652 262

## Beschreibung

### Stand der Technik

Die Erfindung betrifft Mittel zur Übergabe von durch Spritzgussprozesse oder durch andere Prozesse hergestellten Vorformlingen an nachfolgende Prozesse einer Behälterbehandlungsanlage, insbesondere einer Anlage der Lebensmittel- und Getränkeindustrie, bei denen die Vorformlinge zu Behältern umgeformt werden, z.B. durch Streckblasformung.

Bei bekannten Herstellungsprozessen von Behälter, insbesondere Behältern aus Kunststoff, durch Streckblasformung aus Vorformlingen, erfolgt die Herstellung der Vorformlinge und die Herstellung von Behälter aus den Vorformlingen örtlich und zeitlich getrennt.

So werden beispielsweise die Vorformlinge an einem Ort hergestellt, als Schüttgut gelagert und zu einem späteren Zeitpunkt zu einer Behälterherstellungsanlage an einen anderen Ort transportiert, wo sie wieder sortiert und vereinzelt werden und einer Streckblasmaschine zugeführt werden.

Diese bekannten Herstellungsprozesse sind logistisch sehr aufwendig, teuer und störanfällig.

Die Handhabung und Lagerung der Vorformlinge als Schüttgut führt zudem häufig zu Beschädigungen der Vorformlinge und zu Keimkontamination. Auch sind aufwendige Sortiereinrichtungen notwendig, welche das Vorformlingsschüttgut sortieren müssen, bevor die Vorformlinge dann geordnet einer Streckblasmaschine zugeführt werden können.

Eine Vorrichtung nach dem Oberbegriff des Anspruchs 1 wird in US2020290260A1 offenbart. Weitere relevante Vorrichtungen werden in JPH0957824A, US6652262B2, JP2023061898A und US2012126456A1 offenbart

### Aufgabe

Es ist daher somit eine Aufgabe der Erfindung, Mittel zur Übergabe von durch Spritzgussprozesse oder durch andere Prozesse hergestellten Vorformlingen an nachfolgende Prozesse einer Anlage der Lebensmittel- und Getränkeindustrie, bei denen die Vorformlinge zu Behältern umgeformt werden, z.B. durch Streckblasformung, zu verbessern.

Insbesondere ist es eine Aufgabe der Erfindung, die Produktionseffizienz, Wirtschaftlichkeit, Umweltverträglichkeit, Energieeffizienz, Qualität, Hygiene, Sterilität, und Störanfälligkeit bekannter Techniken und Verfahren zur Übergabe von durch Spritzgussprozesse oder durch andere Prozesse hergestellten Vorformlingen an nachfolgende Prozesse der Behälterherstellung aus besagten Vorformlingen zu verbessern.

### Lösung

Dies wird erfindungsgemäß durch die Gegenstände der unabhängigen Ansprüche 1 und 9 erreicht. Vorteilhafte Ausführungsformen und Weiterbildungen sind Gegenstand der Unteransprüche. So stellt die Erfindung insbesondere eine Anlage bzw. eine Behälterbehandlungsanlage zur Herstellung von Behältern bereit, welche folgende Komponenten umfassen kann:
- Eine Herstellungsmaschine, z.B. eine Spritzgussmaschine, zum Herstellen von Vorformlingen.
- Wenigstens eine Einheit zur Herstellung von Behältern aus den in der Herstellungsmaschine hergestellten Vorformlingen.
- Wenigstens eine Verteilvorrichtung konfiguriert zum geordneten Verteilen der von der Herstellungsmaschine, z.B. einer Spritzgussmaschine, hergestellten Vorformlinge.
- Wenigstens einen Lufttransporteur konfiguriert zur geordneten Zufuhr der von der Herstellungsmaschine, z.B. einer Spritzgussmaschine, hergestellten Vorformlinge an die wenigstens eine Einheit zur Herstellung von Behältern aus den Vorformlingen.

Besagte Verteilvorrichtung kann dabei dazu konfiguriert sein, eine Mehrzahl der von der Herstellungsmaschine, z.B. einer Spritzgussmaschine, hergestellten Vorformlinge geordnet in Form einer zweidimensionalen Matrix-Anordnung aufzunehmen und geordnet an den Lufttransporteur übergeben zu können.

Die Herstellungsmaschine für die Vorformlinge kann als Spritzgussmaschine ausgeführt sein.

Ebenso ist es jedoch denkbar, dass andere Typen von Herstellungsmaschinen für die Vorformlinge verwendet werden. Insbesondere sind dabei beispielsweise Herstellungsmaschinen für Vorformlinge denkbar die Vorformlinge über Compression-Moulding Verfahren oder Injection-Compression-Moulding Verfahren herstellen können.

Unter den hierein beschriebenen Behältern und Vorformlingen können insbesondere hierin Behälter und Vorformlingen verstanden werden, die aus Material bestehen, welches Kunststoffmaterialien, z.B. Polyethylenterephthalat (PET) umfasst oder die aus Kunststoffmaterialien, z.B. Polyethylenterephthalat (PET), bestehen.

Unter einem geordneten Verteilen von Vorformlingen kann insbesondere ein Verteilen von Vorformlingen verstanden werden, bei dem die Vorformlinge in Form einer zweidimensionalen Matrix und/oder in Form einer eindimensionalen Matrix, z.B. in einer Reihe oder einer Zeile oder einer Spur oder in einem Strang oder in einer Bahn, gehandhabt und/oder transportiert werden können.

Unter einem geordneten Aufnehmen von Vorformlingen in der Verteilvorrichtung kann insbesondere ein Aufnehmen der Vorformlinge in einer zweidimensionalen Matrix-Anordnung verstanden werden.

Unter einer geordneten Zufuhr von der von der Herstellungsmaschine, z.B. einer Spritzgussmaschine, hergestellten Vorformlinge mittels des Lufttransporteurs an die wenigstens eine Einheit zur Herstellung von Behältern aus den Vorformlingen kann insbesondere eine Zufuhr oder ein Transport oder eine Handhabung der Vorformlinge verstanden werden, bei dem Vorformlinge in Form einer eindimensionalen Matrix, z.B. in einer Reihe oder einer Zeile oder einer Spalte oder einer Spur oder in einem Strang oder in einer Bahn, gehandhabt und/oder transportiert werden können.

Der Lufttransporteur kann insbesondere dazu konfiguriert sein, die von der Verteilvorrichtung übernommenen Vorformlinge in einer Reihe geordnet zur wenigstens einen Einheit zur Herstellung von Behältern aus den Vorformlingen zu transportieren. Der Lufttransporteur kann z.B. als Schacht oder Kanal ausgeführt sein und mittels Druckluftbeaufschlagung betrieben werden.

Unter einer geordneten Zufuhr bzw. Zuführung kann zudem verstanden werden, dass die Vorformlinge in einer vorgebbaren Teilung bzw. in einer vorgebbaren Beabstandung benachbarter Vorformlinge der Einheit zur Herstellung von Behältern aus den Vorformlingen zugeführt werden können.

Unter einer geordneten Übergabe der Vorformlinge aus der Verteilvorrichtung an den Lufttransporteur kann verstanden werden, dass die Vorformlinge in Form einer eindimensionalen Matrix, z.B. in einer Reihe oder einer Zeile oder einer Spalte oder einer Spur oder in einem Strang oder in einer Bahn, an den Lufttransporteur übergeben werden können.

Beispielsweise kann die Verteilvorrichtung dazu konfiguriert sein, selektiv Vorformlinge aus einzelne Zeilen oder einzelne Spalten aus der zweidimensionalen Matrix-Anordnung von aufgenommenen Vorformlinge an den Lufttransporteur übergeben zu können.

Die Vorformlinge in der Behälterbehandlungsanlage können also zu jeder Zeit und an jedem Ort der Behälterbehandlungsanlage eine wohldefinierte, nachverfolgbare und reproduzierbare Position innerhalb der Behälterbehandlungsanlage einnehmen.

Die hierin beschriebene Behälterbehandlungsanlage kommt also gänzlich ohne jegliche Sortiereinrichtung für Vorformlinge aus.

Dies wäre bei der Handhabung von Vorformlingen als Schüttgut nicht möglich.

In der hierin beschriebenen Behälterbehandlungsanlage ist es daher möglich, dass die Vorformlinge zu keiner Zeit als Schüttgut behandelt werden müssen.

Eine derartige Behälterbehandlungsanlage zur Herstellung von Behältern bietet gegenüber bekannten Anlagen zahlreiche Vorteile.

Insbesondere durch die direkte Verkettung bzw. Verknüpfung des Herstellungsprozesses der Vorformlinge und der Herstellung von Behältern aus den Vorformlingen am gleichen Ort ist es beispielsweise möglich, Transportkosten und Lagerkosten für die Vorformlinge erheblich zu reduzieren bzw. vollständig einzusparen, da die Vorformlinge nicht mehr über lange Transportwege von einer Anlage zur Herstellung der Vorformlinge zur Behälterherstellungsanlage transportiert werden müssen.

Die Logistik der Behälterherstellung kann dadurch deutlich vereinfacht und reduziert werden.

Auch können unerwünschte Beschädigungen an den Vorformlingen, die z.B. durch Lagerung oder Transport der Vorformlinge als Schüttgut entstehen können, nahezu vollständig vermieden werden.

Durch die geordnete Aufnahme der Vorformlinge in der Verteilvorrichtung, gefolgt von der geordneten Übergabe der Vorformlinge aus der Verteilvorrichtung zum Lufttransporteur und der anschließenden geordneten Zufuhr der Vorformlinge mittels des Lufttransporteurs an die/eine nachfolgende Einheit zur Herstellung von Behältern aus den Vorformlingen kann auf den Einsatz aufwendiger und störanfälliger Sortiereinrichtungen für die Vorformlinge verzichtet werden.

Zudem ermöglicht die geordnete Behandlung der Vorformlinge eine bessere Nachverfolgung, d.h. ein verbessertes Track&Trace der Vorformlinge durch die Anlage, was die Qualitätsüberwachung der Anlage bzw. der Behälterherstellung erleichtert.

Die Zeit zwischen der Herstellung des Vorformlings und der Herstellung des Behälters aus dem Vorformling kann erheblich gegenüber bekannten Behälterherstellungsverfahren verkürzt werden.

Mögliche unerwünschte Veränderungen der Eigenschaften des Vorformlings, z.B. hinsichtlich seiner Materialeigenschaften und/oder hinsichtlich seiner Formstabilität, die sich aus langen Lagerzeiten oder langen Transportzeiten des Vorformlings ergeben könnten und welche sich nachteilig auf den Streckblasumformungsprozess auswirken können, können ebenfalls reduziert oder vermieden werden.

Dies kann sich positiv auf die Qualität der hergestellten Behälter auswirken.

Ebenso kann durch den verkürzten Produktionsablauf zwischen Herstellung des Vorformlings und der Herstellung des Behälters aus dem Vorformling sowie durch die Vermeidung von Transport bzw. Lagerung der Vorformlinge als Schüttgut die Gefahr einer Keimkontamination der Vorformlinge vermieden bzw. reduziert werden.

So kann beispielsweise die durch die durch den Herstellungsprozess, z.B. einem Spritzgussherstellungsprozess, gegebene Sterilität der Vorformlinge besser genutzt werden, da beispielsweise die durch den Herstellungsprozess, z.B. einem Spritzgussherstellungsprozess, erhitzten und durch die Herstellungshitze sterilisierten Vorformlinge gleich, d.h. ohne Verzögerungen, weiterverarbeitet werden können.

Es können so höhere Sterilitätsraten und eine verbesserte Hygiene der hergestellten Behälter erreicht werden.

Die hierin beschriebene Behälterbehandlungsanlage eignet sich daher für die aseptische Herstellung und Befüllung von aus den Vorformlingen hergestellten Behältern.

Insbesondere kann z.B. der Lufttransporteur als aseptischer Lufttransporteur ausgeführt sein, wobei der Lufttransporteur z.B. mit steriler Luft betrieben werden kann.

Dies trägt ebenfalls zu erhöhter Sterilität und verbesserte Hygiene der hergestellten Behälter bei.

Die Verteilvorrichtung kann quer bzw. transversal zur Transportrichtung des Lufttransporteurs verschiebbar ausgebildet sein.

So kann unter anderem eine größere Flexibilität der Übergabe von Vorformlingen aus der Verteilvorrichtung zum Lufttransporteur erreicht werden.

Beispielsweise ist denkbar, dass die Verteilvorrichtung so gezielt verschiedene Übergabepositionen an den Lufttransporteur oder an mehrere verschiedene Lufttransporteure anfahren kann.

Alternativ und darüber hinaus ist denkbar, dass die Verteilvorrichtung so gezielt einzelne Spalten der Zeilen der zweidimensionalen Matrix-Anordnung, in welcher die Vorformlinge sich in der Verteilvorrichtung befinden können, an den Lufttransporteur übergeben kann bzw. entladen kann.

Die Verteilvorrichtung kann Aufnahmen oder Halterungen für die aufzunehmenden Vorformlinge aufweisen.

Die Halterungen oder Aufnahmen können dabei beweglich und steuerbar ausgeführt sein und können z.B. steuerbar bewegt werden zwischen einer Halteposition, in der die Vorformlinge in der Verteilvorrichtung aufgenommen und gehalten werden und einer Freigabeposition, in der die Vorformlinge nicht länger von den Aufnahmen oder Halterungen der Verteilvorrichtung gehalten werden.

Dies kann eine geordnete Übergabe der von der Verteilvorrichtung aufgenommenen Vorformlinge an den Lufttransporteur erleichtern.

Die Steuerung der Bewegung der Halterungen oder Aufnahmen der Verteilvorrichtung kann dabei im Übrigen von einer Steuereinheit der Behälterbehandlungsanlage gesteuert werden.

Die Verteilvorrichtung kann eine Mehrzahl von beweglichen Tragleisten aufweisen und besagte Halterungen oder Aufnahme für die von der Verteilvorrichtung aufzunehmenden Vorformlinge können durch die Tragleisten gebildet werden.

Besagte Tragleisten können so ausgeführt sein, dass die Vorformlinge mit ihren Tragringen in den Tragleisten hängend, insbesondere senkrecht und in Schwerkraftrichtung hängend, in der Verteilvorrichtung in der Halteposition aufgenommen werden können.

Besagte Tragleisten können zudem so ausgeführt sein, dass sie von der Halteposition in die Freigabeposition bewegt werden können, wobei die Vorformlinge in der Freigabeposition nicht länger von den Tragleisten gehalten werden und an den Lufttransporteur übergeben werden können.

Dies kann durch einen Freigabemechanismus ermöglicht werden, der die Tragleisten entsprechend bewegen kann, z.B. wegklappen kann oder auseinanderziehen kann oder auseinandergefahren kann.

Dies kann eine geordnete Übergabe der von der Verteilvorrichtung aufgenommenen Vorformlinge an den Lufttransporteur erleichtern.

Paare von Tragleisten können dabei parallel beabstandet zueinander angeordnet sein.

In besagter Halteposition können die von der Verteilvorrichtung aufgenommenen Vorfomlinge jeweils von sich gegenüberliegenden Tragleisten eines Tragleistenpaars gehalten werden.

Besagte Tragleistenpaare können dabei so konfiguriert bzw. so angeordnet sein, dass sie eine Zeile oder Spalte der zweidimensionalen Matrix-Anordnung definieren können, in der Vorfomlinge in der Verteilvorrichtung aufgenommen werden können.

Um beispielsweise eine Freigabeposition erreichen zu können, können dann beispielsweise die Tragleistenpaare auseinandergefahren bzw. auseinanderbewegt oder weggeklappt werden, um die Vorformlinge zeilenweise oder spaltenweise an den Lufttransporteur übergeben zu können.

Die besagten Tragleisten können dabei z.B. entlang Führungsschienen verfahrbar sein oder mittels Gelenkelementen bewegt werden.

Dies kann ebenfalls eine geordnete und flexible Übergabe der von der Verteilvorrichtung aufgenommenen Vorformlinge an den Lufttransporteur erleichtern.

Die besagten beispielhaften Tragleisten können jeweils aus einzelnen Modulen gebildet werden, wobei die Module aneinandergereiht werden können.

Alternativ kann eine Mehrzahl von Tragleisten aus einer Einheit gebildet werden.

Diese beispielhafte modulare Bauweise ermöglicht die einfache Anpassung der Einsatzmöglichkeiten, der Dimensionierung und der Kapazität der Verteilvorrichtung an verschiedene Produktionsanforderungen oder Produktionsänderungen, wie z.B. Anpassung an verschiedene Produktionsraten oder verschiedene Behältersorten bzw. verschiedene Vorformlingssorten.

Alternativ kann die Verteilvorrichtung wie folgt ausgeführt sein.

Die Verteilvorrichtung kann wenigstens eine Bahn zum Transport der aufgenommenen Vorformlinge aufweisen und wenigstens einen Ausgang, der zum Lufttransporteur führt.

Dabei kann ein Teil der wenigstens einen Bahn wenigstens eine Zeile der zweidimensionalen Matrix-Anordnung definieren, in der die Vorformlinge in der Verteilvorrichtung aufgenommen werden können.

Die Verteilvorrichtung kann dabei dazu konfiguriert sein, die aufgenommenen Vorformlinge entlang der wenigstens einen Bahn zum wenigstens einen Ausgang der Verteilvorrichtung zu transportieren, um die aufgenommenen Vorformlinge an den Lufttransporteur übergeben zu können.

Der Lufttransporteur kann also direkt an den/an einen Ausgang der Verteilvorrichtung gekoppelt sein.

Die Verteilvorrichtung in dieser Ausführung kann eine Mehrzahl von Tragleisten aufweisen, welche die wenigstens eine Bahn festlegen können, und wobei die Tragleisten so ausgeführt sein können, dass die Vorformlinge mit ihren Tragringen in den Tragleisten hängend, insbesondere senkrecht und in Schwerkraftrichtung hängend, transportiert werden können.

Die wenigstens eine Bahn kann auch als Kanal oder Schacht aufgefasst werden, in dem sich die Vorformlinge bewegen können bzw. in dem die Vorformlinge transportiert werden können.

Die Tragleisten können dabei die Ränder bzw. die Begrenzung der wenigstens einen Bahn definieren. Die Vorformlinge können dann innerhalb der Bahn, beispielsweise mit ihren Tragringen zwischen benachbarten Tragleisten hängend, transportiert werden.

Die Tragleisten können auch als Führungsleisten aufgefasst werden, welche die Vorformlinge durch die Verteilvorrichtung führen können und wobei die Vorformlinge über ihre Tragringe entlang der Tragleisten gleiten können.

Die Verteilvorrichtung kann dabei auch dazu konfiguriert sein, die Vorformlinge per Druckluftbeaufschlagung entlang der wenigstens einen Bahn zu transportieren.

Die Verteilvorrichtung kann also selbst ebenfalls als Lufttransporteur ausgeführt sein.

Beispielsweise kann die Verteilvorrichtung entlang der wenigstens einen Bahn Luftschächte mit Kiemen aufweisen, über welche die Druckluft zum Bewegen bzw. zum Fördern der Vorformlinge entlang der wenigstens einen Bahn beaufschlagt werden kann.

Alternativ oder zusätzlich kann die Verteilvorrichtung dazu konfiguriert sein, die Vorformlinge mechanisch entlang der wenigstens einen Bahn zu transportieren.

Beispielsweise kann die Verteilvorrichtung eine Vielzahl mechanisch antreibbarer Mitnehmer, z.B. Mitnehmernocken, aufweisen, welche dazu konfiguriert sein können, die aufgenommenen Vorformlinge entlang der durch die Tragleisten festgelegten wenigstens einen Bahn zum wenigstens einen Ausgang der Verteilvorrichtung zu transportieren, zur Übergabe an den Lufttransport, der die Vorformlinge dann an die wenigstens eine Einheit zur Herstellung von Behältern aus den Vorformlingen in geordneter Form weitertransportieren kann.

Die beispielhaften antreibbaren Mitnehmer können dabei so konfiguriert sein, dass sie in Berührungskontakt mit den Vorformlingen, z.B. in Kontakt mit den Tragringen der Vorformlinge und/ oder in Kontakt mit einer Oberfläche des Vorformlings unterhalb und/oder oberhalb des Tragrings treten können.

Die beispielhaften antreibbaren Mitnehmer können dabei in die wenigstens eine Bahn hineinragen. Beispielsweise können die antreibbaren Mitnehmer bis zur Mittellinie der wenigstens einen Bahn in die Bahn hineinragen oder sogar weiter.

Die Verteilvorrichtung kann ferner umlaufende Transportmittel umfassen, z.B. Transportbänder oder Transportketten oder Transportriemen, welche den Tragleisten zugeordnet sein können und wobei die Mitnehmer zum Transport der Vorformlinge an den umlaufenden Transportmitteln angebracht sein können.

Die umlaufenden Transportmittel können dabei beispielsweise von steuerbaren Antriebsrollen angetrieben werden.

Die beispielhaften umlaufenden Transportmittel können mit den Tragleisten verbunden sein oder können von diesen beabstandet sein, d.h. nicht in Berührungskontakt mit den Tragleisten sein.

Die Verteilvorrichtung kann so konfiguriert sein, dass sich die Vorformlinge entlang wenigstens einer wohldefinierten Bewegungsrichtung bzw. entlang wenigstens einer wohldefinierten Transportbewegungsrichtung entlang der wenigstens einen Bahn bewegen können.

Die Bewegungsrichtung der Vorformlinge kann dabei beispielsweise der Bewegungsrichtung der Mitnehmer der umlaufenden Transportmittel entsprechen bzw. dazu parallel sein.

Alternativ ist es jedoch möglich, dass die Bewegungsrichtung der Mitnehmer der umlaufenden Transportmittel einen Winkel, z.B. einen Winkel von 1° oder größer, mit einer Transportbewegungsrichtung eines Vorformlings entlang zumindest eines Teils, insbesondere entlang eines geradlinigen Teils oder Segments der Bahn einschließen kann.

So kann unter anderem vermieden werden, dass beispielsweise Mitnehmer von verschiedenen umlaufenden Transportmitteln, welche benachbarten und sich gegenüberliegenden Tragleisten zugeordnet sind, miteinander kollidieren können. Beschädigungen der Verteilvorrichtung können so vermieden werden.

Alternativ oder zusätzlich können Mitnehmer von verschiedenen umlaufenden Transportmitteln, welche benachbarten und sich gegenüberliegenden Tragleisten zugeordnet sind, zueinander versetzt angeordnet sein.

Die Verteilvorrichtung kann ferner dazu konfiguriert sein, die Vorformlinge wahlweise entlang verschiedener, insbesondere entgegengesetzter Bewegungsrichtungen bzw. entgegengesetzter Transportbewegungsrichtungen zu transportieren.

Alternativ oder zusätzlich kann die Verteilvorrichtung mehrere Ausgänge für die Vorformlinge aufweisen, wobei die Verteilvorrichtung dazu konfiguriert sein kann, die Vorformlinge wahlweise zu einem Ausgang oder zu mehreren Ausgängen zu transportieren.

Während beispielweise ein Ausgang der Verteilvorrichtung zum Lufttransporteur führen kann, der die Vorformlinge dann an die wenigstens eine Einheit zur Herstellung von Behältern aus den Vorformlingen in geordneter Form weitertransportieren kann, kann ein anderer Ausgang der Verteilvorrichtung zu einer anderen Einheit der Behälterbehandlungsanlage, z.B. zu einer Inspektionseinheit oder zu einer Ausschussauffangeinheit, führen.

Wie bereits beschrieben, kann die Verteilvorrichtung dazu konfiguriert sein, die Vorformlinge wahlweise entlang verschiedener, insbesondere entgegengesetzter Bewegungsrichtungen bzw. entgegengesetzter Transportbewegungsrichtungen zu transportieren.

Beispielsweise kann hierzu die Verteilvorrichtung umlaufende Transportmittel umfassen, deren Transportumlaufrichtung steuerbar ist und umgekehrt werden kann.

Die Steuerung der Bewegung der umlaufenden Transportmittel der Verteilvorrichtung kann dabei im Übrigen von einer/der Steuereinheit der Behälterbehandlungsanlage gesteuert werden.

So können die Vorformlinge in geordneter, z.B. einspurig bzw. einzeilig, und in kontrollierter Weise zu den besagten möglichen verschiedenen Ausgängen transportiert werden.

Dies erhöht die Flexibilität der Verteilvorrichtung und somit die Effizienz und Flexibilität der Anlage.

Durch die Aneinanderreihung der Vorformlinge in einer Bahn und z.B. getrennt durch die Mitnehmer der umlaufenden Transportmittel ist es auch möglich, einzelne Vorformlinge über einer Ausschleusung zu positionieren und gezielt auszuleiten.

Die mögliche geordnete, einzeilige bzw. einspurige Ausgabe von Vorformlinge in einer Reihe, beabstandet voneinander durch die Mitnehmer der umlaufenden Transportmittel über den Ausgang bzw. über die Ausgänge der Verteilvorrichtung erlaubt eine genauere Kontrolle und Steuerung des Stroms der Vorformlinge durch die Behälterbehandlungsanlage.

Die besagten beispielhaften Tragleisten können jeweils aus einzelnen Modulen gebildet werden, wobei die Module aneinandergereiht werden können.

Alternativ kann eine Mehrzahl von Tragleisten aus einer Einheit gebildet werden.

Diese beispielhafte modulare Bauweise ermöglicht die einfache Anpassung der Einsatzmöglichkeiten, der Dimensionierung und der Kapazität der Verteilvorrichtung an verschiedene Produktionsanforderungen oder Produktionsänderungen, wie z.B. Anpassung an verschiedene Produktionsraten oder verschiedene Behältersorten bzw. verschiedene Vorformlingssorten.

In allen vorangehend beschriebenen Ausführungsmöglichkeiten bzw. in allen vorangehend beschriebenen Ausführungsformen kann die Verteilvorrichtung dazu konfiguriert sein, ein Vielfaches der Anzahl der Vorformlinge, die pro Zyklus der Spritzgussmaschine hergestellt werden können, gleichzeitig geordnet aufzunehmen.

Beispielsweise kann die Verteilvorrichtung dazu konfiguriert sein, 50 bis 300 Vorformlinge gleichzeitig geordnet aufzunehmen.

Die Matrix-Anordnungsform der Verteilvorrichtung in allen beschriebenen Ausführungsmöglichkeiten bzw. in allen vorangehend beschriebenen Ausführungsformen kann beispielsweise so dimensioniert sein, dass eine Matrix-Anordnungsform des formgebenden Werkzeugs der Herstellungsmaschine, z.B. einer Spritzgussmaschine, eine Teilmatrix der Matrix-Anordnungsform der Verteilvorrichtung sein kann.

Sind beispielsweise 100 Vorformlinge des formgebenden Werkzeugs der Herstellungsmaschine, z.B. einer Spritzgussmaschine in einer 10 x 10 Matrix angeordnet, kann die Matrix-Anordnungsform der Verteilvorrichtung beispielsweise als 20 x 10 Matrix ausgeführt sein, so dass die Verteilvorrichtung zwei Zyklen von durch die Herstellungsmaschine, z.B. einer Spritzgussmaschine, hergestellten Vorformlinge aufnehmen kann.

Alternativ kann die Matrix-Anordnungsform der Verteilvorrichtung beispielsweise so dimensioniert sein, dass sie der Dimensionierung der Matrix-Anordnungsform des formgebenden Werkzeugs der Herstellungsmaschine, z.B. einer Spritzgussmaschine, genau entsprechen kann, so dass die Verteilvorrichtung genau die Anzahl der Vorformlinge aufnehmen kann, die in einem Zyklus der Herstellungsmaschine, z.B. einer Spritzgussmaschine, hergestellt werden können.

Die genannten beispielhaften Abstimmungen der Dimensionierung der Matrix-Anordnungsform der Verteilvorrichtung und der Matrix-Anordnungsform des formgebenden Werkzeugs der Herstellungsmaschine, z.B. einer Spritzgussmaschine, kann die Effizienz der Behälterbehandlungsanlage zur Herstellung von Behältern verbessern.

Die oben und hierin beschriebene Behälterbehandlungsanlage kann ferner wenigstens eine automatische Handlingseinheit, z.B. einen Roboter, umfassen, wobei die automatische Handlingseinheit, z.B. der Roboter, wenigstens einen Greifer aufweisen kann und der wenigstens eine Greifer dazu konfiguriert sein kann, Vorformlinge aus dem formgebenden Werkzeug der Herstellungsmaschine, z.B. einer Spritzgussmaschine, zu entnehmen und an die Verteilvorrichtung geordnet in Form der/einer zweidimensionalen Matrix-Anordnung zu übergeben.

Der wenigstens eine Greifer der automatische Handlingseinheit, z.B. des Roboters, kann zudem mehrere Greiforgane aufweisen, wobei die Greiforgane jeweils eindeutig einem Vorformling des formgebenden Werkzeugs der Herstellungsmaschine, z.B. einer Spritzgussmaschine, zuordbar sind bzw. zugeordnet werden können.

Dies kann eine wohldefinierte und geordnete Übergabe der Vorformlinge an die Einheit zur Herstellung von Behältern aus den Vorformlingen erleichtern.

Die beispielhaften Greiforgane des wenigstens einen Greifers der automatischen Handlingseinheit, z.B. des Roboters, können in einem Raster bzw. in einer Matrix angeordnet sein, welches dem Raster bzw. welches der zweidimensionalen Matrix-Anordnung entsprechen kann, in dem die Vorformlinge im formgebenden Werkzeug der Herstellungsmaschine, z.B. Spritzgussmaschine angeordnet sein können und in dem die Vorformlinge von der Verteilvorrichtung aufgenommen werden können.

Die beispielhaften Greiforgane des wenigstens einen Greifers der automatischen Handlingseinheit, z.B. des Roboters, können zudem individuell ansteuerbar ausgeführt sein.

Dies kann die Flexibilität und Präzision der Handhabung und Übergabe der Vorformlinge an die Verteilvorrichtung verbessern.

Der wenigstens eine Greifer der automatischen Handlingseinheit, z.B. des Roboters, oder wenigstens ein Greiforgan des Greifers der automatischen Handlingseinheit, z.B. des Roboters, kann dazu konfiguriert oder so ausgeführt sein, dass die Kraft zum Greifen und/oder zum Halten der Vorformlinge durch Kraftschluss und/oder Reibschluss und/oder Formschluss und/oder in Kombination mit Verwendung eines Fluidstroms, z.B. mittels Vakuumbeaufschlagung, übertragen werden kann.

Die besagte wenigstens eine Einheit zur Herstellung von Behältern aus den Vorformlingen, zu der die Vorformlinge vom Lufttransporteur, der an die Verteilvorrichtung gekoppelt ist, transportiert werden können, kann beispielsweise eine Einheit folgender Art sein: Einlaufeinheit einer Streckblasmaschine, Einlaufeinheit einer Heizstrecke, Fördereinheit, Transporteinheit, Transportweicheneinheit zur weiteren Aufteilung und/oder zum weiteren Umleiten des Vorformlingsstroms durch die Anlage, Einlauf einer Vorformlingsreinigungseinheit, Inspektionseinheit, Ausschussauffangeinheit.

Die oben und hierin beschriebene Kombination von Verteilvorrichtung und Lufttransporteur ist also flexibel einsetzbar und kann Vorformlinge den verschiedensten Einheiten der Behälterbehandlungsanlage zuführen.

Die Erfindung stellt zudem nicht nur eine, wie vorangehend beschriebene, Behälterbehandlungsanlage zur Herstellung von Behältern bereit, sondern auch eine Verteilvorrichtung für Vorfomlinge zum Einsatz in einer, wie vorangehend beschriebenen, Behälterbehandlungsanlage zur Herstellung von Behältern, und wobei die Verteilvorrichtung dazu konfiguriert sein kann, eine Mehrzahl der von der Herstellungsmaschine, z.B. einer Spritzgussmaschine, hergestellten Vorformlinge geordnet in Form einer zweidimensionalen Matrix-Anordnung aufzunehmen und geordnet an einen Lufttransporteur zu übergeben.

Die Verteilvorrichtung kann dabei einige oder alle der oben beschriebenen Merkmale aufweisen.

Die Erfindung stellt zudem ein Verfahren zur Handhabung von Vorformlingen in einer wie oben beschriebenen Behälterbehandlungsanlage zur Herstellung von Behältern bereit, welches einige oder alle der folgenden Schritte umfassen kann:
- Ein (geordnetes) Entnehmen der Vorformlinge aus einem formgebenden Werkzeug der Spritzgussmaschine.
- Eine geordnete Übergabe der entnommenen Vorformlinge an eine Verteilvorrichtung, wobei die Verteilvorrichtung dazu konfiguriert ist, eine Mehrzahl der von der Herstellungsmaschine, z.B. einer Spritzgussmaschine, hergestellten Vorformlinge geordnet in Form einer zweidimensionalen Matrix-Anordnung aufzunehmen.
- Eine geordnete Übergabe der Vorformlinge aus der Verteilvorrichtung an einen Lufttransporteur.
- Ein geordneter Transport der Vorformlinge mittels des Lufttransporteurs an die wenigstens eine Einheit zur Herstellung von Behältern aus den Vorformlingen, z.B. eine Streckblasmaschine.

Wie oben erwähnt kann unter den Begriffen "geordnetes Entnehmen", "geordnete Übergabe" und "geordneter Transport" von Vorformlingen insbesondere eine Handhabung von Vorformlingen verstanden werden, in der Vorformlinge in Form einer zweidimensionalen Matrix-Anordnung und/oder in Form einer eindimensionalen Matrix-Anordnung bzw. in Form einer Reihe oder in Form einer Spalte oder in Form einer Zeile oder in Form einer Spur oder in Form eines Strangs oder in Form einer Bahn wohldefiniert angeordnet und bewegt werden können.

Weitere beispielhafte Aspekte der Erfindung bzw. beispielhafte Aspekte der Anspruchsmerkmale werden beispielhaft durch folgende Figuren veranschaulicht.
- **Fig. 1a:**: Beispielhafte Verteilvorrichtung für Vorfomlinge
- **Fig. 1b:**: Beispielhafte alternative Verteilvorrichtung für Vorfomlinge
- **Fig. 1c:**: Beispielhafter Freigabemechanismus
- **Fig. 2:**: Beispielhaftes Verfahren
- **Fig. 3:**: Beispielhafte Behälterbehandlungsanlage

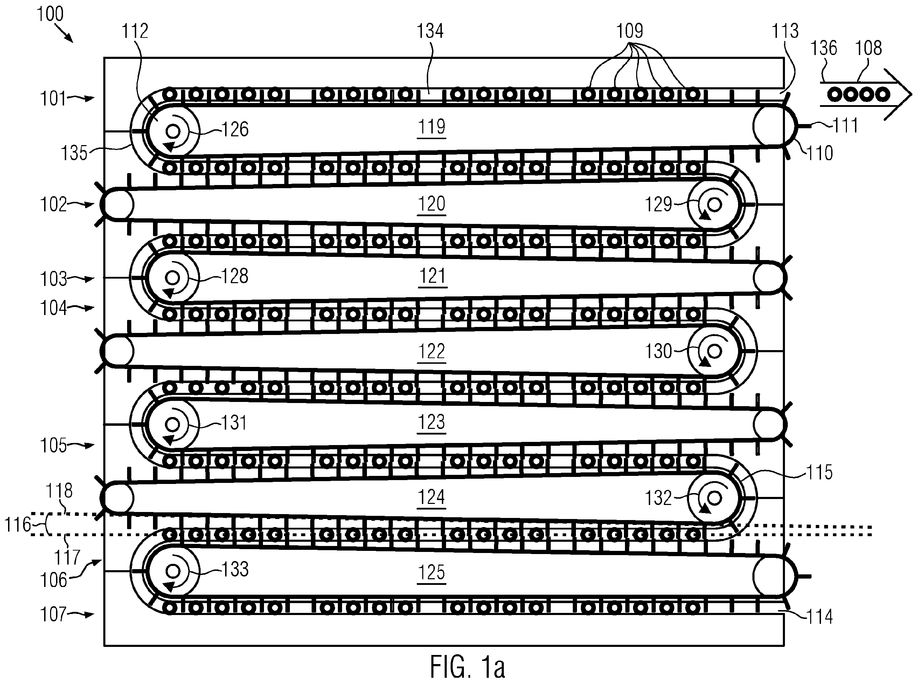

Die **Fig. 1a** stellt eine beispielhafte Draufsicht auf eine beispielhafte Verteilvorrichtung 100 dar, welche eine Mehrzahl von Vorformlingen 109 in einer beispielhaften zweidimensionalen Matrix-Anordnung aufgenommen hat.

Diese Vorformlinge 109 können beispielsweise direkt aus einem formgebenden Werkzeug einer Herstellungsmaschine (nicht dargestellt), z.B. einer Spritzgussmaschine, stammen, bzw. von einer automatischen Handlingseinheit, z.B. einem Roboter (nicht dargestellt), aus dem formgebenden Werkzeug einer Herstellungsmaschine, z.B. einer Spritzgussmaschine, in die Verteilvorrichtung 100 übergeben worden sein.

Im dargestellten Beispiel ist dies eine Matrix-Anordnung mit acht Zeilen und achtzehn Spalten, d.h. eine 8 x 18 Matrix, in der also 144 Vorformlinge aufgenommen sind und innerhalb der Verteilvorrichtung 100 entlang der beispielhaften Bahn 115 transportiert werden können.

Die Breite der Bahn 115 kann beispielsweise dem mittleren Durchmesser der Vorfomlinge 109 entsprechen und etwas kleiner sein kann als der mittlere Durchmesser der Tragringe der Vorformlinge.

Andere Matrix-Anordnungen bzw. andere Befüllungen der Verteilvorrichtung 100 sind ebenfalls denkbar. So muss nicht jeder Platz der Matrix mit Vorformlingen befüllt sein. Tatsächlich sind in dem dargestellten Beispiel nicht alle Matrixplätze besetzt, sondern es sind noch freie Plätze oder Lücken verfügbar, in die weitere Vorformlinge aufgenommen werden könnten.

Die Befüllung der Verteilvorrichtung 100 kann flexibel an gewünschte Teilungen oder Taktungen für den auszugebenden geordneten Vorformlingsstrom angepasst werden.

Im dargestellten Beispiel weist die Verteilvorrichtung 100 zwei beispielhafte Ausgänge 113, 114 auf und die beispielhafte Bahn 114 erstreckt sich zwischen den beiden Ausgängen 113, 114.

Die beispielhafte Bahn 115 wird durch die Anordnung der beispielhaften Tragleisten bzw. Tragleistenmodule 101, 102, 103, 104, 105, 106, 107 gebildet, welche die Vorformlinge 109 mit ihren Tragringen in den Tragleisten hängend transportieren können, wobei beispielweise die Tragringe der Vorformlinge von sich gegenüberliegenden Tragleisten getragen und geführt werden können.

Mit anderen Worten können die Vorformlinge 109 mit ihren Tragringen in dem Bahnkanal 115 hängend transportiert werden, welcher von zwei sich gegenüberliegenden Tragleisten gebildet werden kann.

Die Bahn 115 kann mehrere geradlinige Segmente aufweisen, die parallel zueinander sein können und die Zeilen der beispielhaften zweidimensionalen Matrix-Anordnung definieren können.

Besagte geradlinige Segmente der Bahn 115 können dabei über Kurvensegmente miteinander verbunden sein.

Beispielhaft ist in der Figur das oberste geradlinige Segment der Bahn 115 mit dem Bezugszeichen 134 versehen, das sich an das Kurvensegment 135 anschließt.

Die Tragleisten oder Tragleistenmodule 101, 102, 103, 104, 105, 106, 107 können jeweils umlaufende Transportmittel 119, 120, 121, 122, 123, 124, 125 umfassen, die beispielsweise als umlaufende Transportriemen mit Mitnehmern ausgebildet sein können.

Die beispielhaften umlaufenden Transportmittel 119, 120, 121, 122, 123, 124, 125 bzw. die umlaufenden Transportriemen können jeweils von Antriebsrollen angetrieben werden.

Die beispielhaften umlaufenden Transportmittel 119, 120, 121, 122, 123, 124, 125 können ebenfalls Umlenkrollen (nicht dargestellt) aufweisen, welche den jeweiligen Antriebsrollen gegenüberliegen können.

Aus Gründen der Übersichtlichkeit wurden lediglich der Transportriemen 110 mit Mitnehmern 111 und Antriebsrolle 112 mit Bezugszeichen versehen.

Die Antriebsrollen und ihre Drehrichtungen sind steuerbar, so dass beispielsweise die Drehrichtungen der Antriebsrollen umkehrbar sind.

Beispielhafte Drehrichtungen der Antriebsrollen sind mit den Bezugszeichen 126, 127, 128, 129, 130, 131, 132, 133 versehen.

In der dargestellten beispielhaften Konfiguration der Antriebsrollen werden die von der Verteilvorrichtung aufgenommenen Vorformlinge 109 beispielsweise zum Ausgang 113 geführt und dort beispielsweise ausgegeben und dort z.B. an einen Lufttransporteur 136 übergeben, der die Vorformlinge dann weiter an eine (nicht dargestellte) Einheit zur Herstellung von Behältern aus den Vorformlingen transportieren kann.

Das Bezugszeichen 108 kennzeichnet beispielsweise am Ausgang 113 ausgegebene Vorformlinge, die dann über den Lufttransporteur 136 weiter an eine (nicht dargestellte) Einheit zur Herstellung von Behältern aus den Vorformlingen transportiert werden können.

Bei einer beispielhaften Umkehr der Drehrichtungen 126, 127, 128, 129, 130, 131, 132, 133 der Antriebsrollen würden die von der Vorrichtung 100 aufgenommenen Vorformlinge 109 beispielsweise zum Ausgang 114 geführt und könnten dort beispielsweise an eine (nicht dargestellte) andere Einheit der Behälterbehandlungsanlage, z.B. eine Inspektionseinheit, ausgegeben werden.

Um die Störanfälligkeit der Verteilvorrichtung 100 zu verbessern und einen störungsfreien Transport der Vorformlinge 109 innerhalb der Verteilvorrichtung 100 zu gewährleisten, können die umlaufenden Transportmitteln so konfiguriert sein, dass die Bewegungsrichtung der Mitnehmer der umlaufenden Transportmittel einen Winkel, z.B. einen Winkel von 1° oder größer, mit einer Transportbewegungsrichtung eines Vorformlings entlang eines geradlinigen Segmentes der Bahn einschließen kann.

Die Kontur der umlaufenden Transportmittel 119, 120, 121, 122, 123, 124, 125 kann also konisch sein.

In dargestellten Beispiel wurde beispielsweise die Bewegungsrichtung 118 der Mitnehmer des umlaufenden Transportmittels 124 und die Transportbewegungsrichtung 107 der Vorformlinge entlang des geradlinigen Bahnsegmentes zwischen Transportmittel 124 und Transportmittel 125 markiert und der beispielhafte Winkel 116 zwischen den beiden Richtungen eingezeichnet.

Diese beispielhafte Ausführung der Geometrie von geradlinigen Bahnsegmenten und den die geradlinigen Bahnsegmente umgebenden umlaufenden Transportmitteln, kann (wie dargestellt) für jedes geradlinige Bahnsegment der Verteilvorrichtung 100 realisiert werden.

Gegenüberliegende Mitnehmer von gegenüberliegenden Transportmitteln können sich entlang der geradlinigen Bahnsegmente also parallel zueinander bewegen und bis zur Mittellinie der geradlinigen Bahnsegmente in die Bahn hineinragen, um so einen optimalen Berührungskontakt mit den zu transportierenden Vorformlingen herstellen zu können.

Eine Kollision von sich gegenüberliegenden Mitnehmern bei Betrieb der Verteilvorrichtung 100 kann so vermieden werden.

Alternativ ist jedoch denkbar, dass die Verteilvorrichtung so ausgeführt sein kann, dass die Bewegungsrichtung der Vorformlinge der Bewegungsrichtung der Mitnehmer der umlaufenden Transportmittel entsprechen bzw. dazu parallel sein können.

In diesem Fall könnten dann beispielsweise Mitnehmer von verschiedenen umlaufenden Transportmitteln, welche benachbarten und sich gegenüberliegenden Tragleisten zugeordnet sind, zueinander versetzt angeordnet sein.

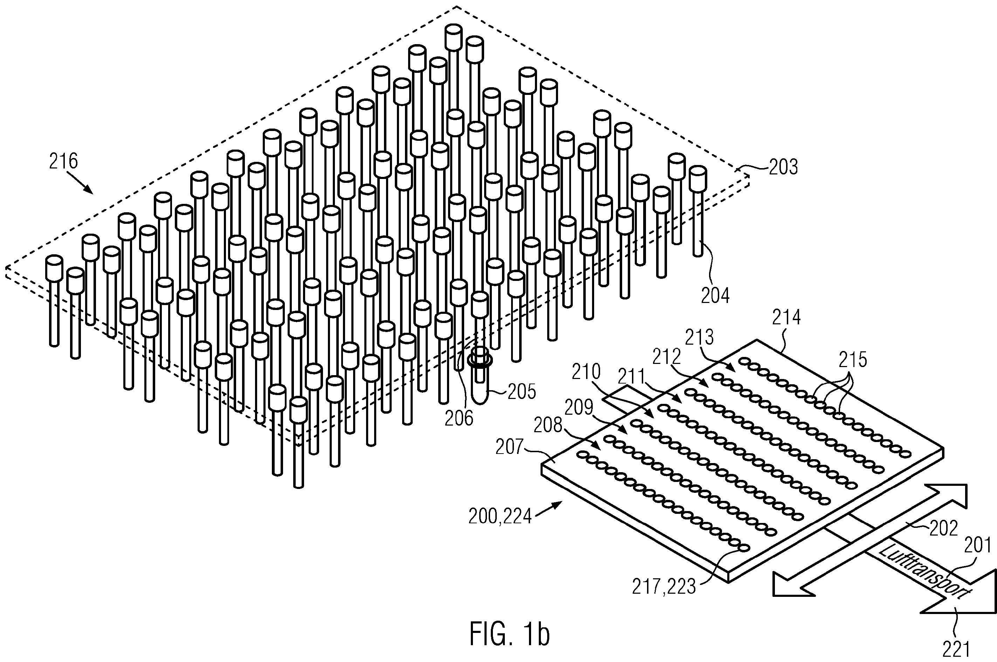

Die **Fig. 1b** zeigt, teilweise schematisch vereinfacht, eine alternative Verteilvorrichtung 200, welche eine Mehrzahl von Vorformlingen 215 in einer beispielhaften zweidimensionalen Matrix-Anordnung aufgenommen hat.

Die Vorformlinge können dabei beispielsweise von einer automatischen Handlingseinheit 216, z.B. einem Roboter, aus einem formgebenden Werkzeug einer Herstellungsmaschine (nicht dargestellt), z.B. einer Spritzgussmaschine, entnommen und an die Verteilvorrichtung 200 übergeben werden.

Die (bewegliche) automatische Handlingseinheit 216, z.B. ein/der (bewegliche) Roboter, kann dabei beispielsweise über einen (beweglichen) Greifer 203 verfügen, der eine Vielzahl von (individuell steuerbaren) Greiforganen 204 aufweisen kann, wobei die Greiforgane 204 Vorformlinge 205 aufnehmen, handhaben, transportieren und übergeben können.

Aus Gründen der Übersichtlichkeit wurde in der Figur lediglich ein beispielhafter Vorformling 205 eingezeichnet, der von einem Greiforgan 206 der automatischen Handlingseinheit 216, z.B. einem Roboter, gehalten wird.

Die Greiforgane 204 können dabei beispielsweise in Form einer Matrix angeordnet sein, welche der Matrix-Anordnung der Vorformlinge im formgebenden Werkzeug der/einer Herstellungsmaschine (nicht dargestellt), z.B. einer Spritzgussmaschine, entsprechen kann und/oder welche der zweidimensionalen Matrix-Anordnung der Vorformlinge in der Verteilvorrichtung 200 entsprechen kann.

Die Verteilvorrichtung 200 kann über eine Vielzahl von beweglichen Tragleisten oder beweglicher Tragleistenmodule 207, 208, 209, 210, 211, 212, 213, 214 verfügen, welche die Vorformlinge mit ihren Tragringen in den Tragleisten hängend in der Verteilvorrichtung in einer/der Halteposition aufnehmen können.

Beispielsweise können die Vorformlinge 223 in der Zeile bzw. in der Spalte 217 der zweidimensionalen Matrix-Anordnung der Verteilvorrichtung 200 aufgenommen werden und von dem/einem Tragleistenpaar gebildet aus den Tragleisten 207, 208 in einer Halteposition gehalten werden.

Im dargestellten Beispiel sind alle Tragleisten 207, 208, 209, 210, 211, 212, 213, 214 der Verteilvorrichtung 200 in einer/der Halteposition 224 dargestellt.

Die beweglichen Tragleisten bzw. die beweglichen Tragleistenmodule 207, 208, 209, 210, 211, 212, 213, 214 können von einer/der dargestellten Halteposition in eine Freigabeposition bewegt werden. Beispielsweise können die beweglichen Tragleisten auseinandergefahren werden, z.B. entlang nicht dargestellter Führungsschienen, um die besagte Freigabeposition zu erreichen, in der die Vorformlinge nicht länger von den Tragleisten gehalten werden, um so an den Lufttransporteur übergeben werden zu können.

In der Freigabeposition können beispielsweise die Vorformlinge auf einen unterhalb der Verteilvorrichtung angeordneten, schachtartigen oder kanalartigen Lufttransporteur 201 durch einfache Schwerkraftwirkung fallen oder heruntergleiten, um dann vom Lufttransporteur in Richtung 221 weiter an die wenigstens eine Einheit zur Herstellung von Behältern aus den Vorformlingen transportiert werden zu können.

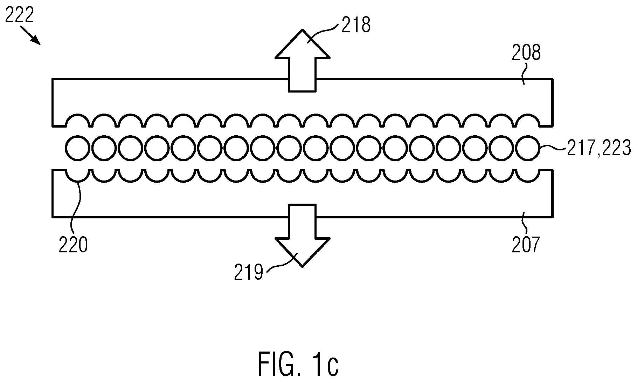

Eine solche beispielhafte Bewegung bzw. eine beispielhafte Freigabeposition ist in der Fig. 1c dargestellt.

Die gesamte Verteilvorrichtung 200 kann quer bzw. transversal bzw. orthogonal verschiebbar bzw. beweglich zur Transportrichtung 221 des Lufttransporteurs 201 sein. Die beispielhaften Bewegungsrichtungen der gesamten Verteilvorrichtung 200 sind mit dem Bezugszeichen 202 markiert.

So können gezielt und geordnet einzelne Zeilen oder Spalten mit Vorformlingen aus der Verteilvorrichtung 200 an den Lufttransporteur 201 übergeben werden.

Die Fig. 1c zeigt beispielhaft eine mögliche Bewegung von Tragleisten einer Verteilvorrichtung zum Erreichen einer Freigabeposition, in der Vorformlinge aus der Verteilvorrichtung an einen/den Lufttransporteur übergeben werden können.

Insbesondere zeigt die Fig. 1c beispielhaft die Bewegung 218, 219 der Tragleisten 207 und 208 der Verteilvorrichtung 200 aus Fig. 1b in eine beispielhafte Freigabeposition 222, in der die Vorformlinge 223 nicht länger von den Tragleisten 207, 208 gehalten werden, um so an den Lufttransporteur 221 (siehe Fig. 1b) übergeben werden zu können.

So können dann beispielsweise die Vorformlinge 223 der Zeile bzw. Spalte 217 gleichzeitig geordnet und gezielt an den Lufttransporteur 221 (siehe Fig. 1b) übergeben werden, wobei sich der Lufttransporteur 221 (siehe Fig. 1b) unterhalb der Verteilvorrichtung 200, d.h. unterhalb der Tragleisten 207 und 208 befinden kann.

Darüber hinaus zeigt die Fig. 1c beispielhaft, dass die Tragleisten beispielhafte optionale Ausbuchtung aufweisen können, welche das Aufnehmen und das Halten der Vorformlinge erleichtern können.

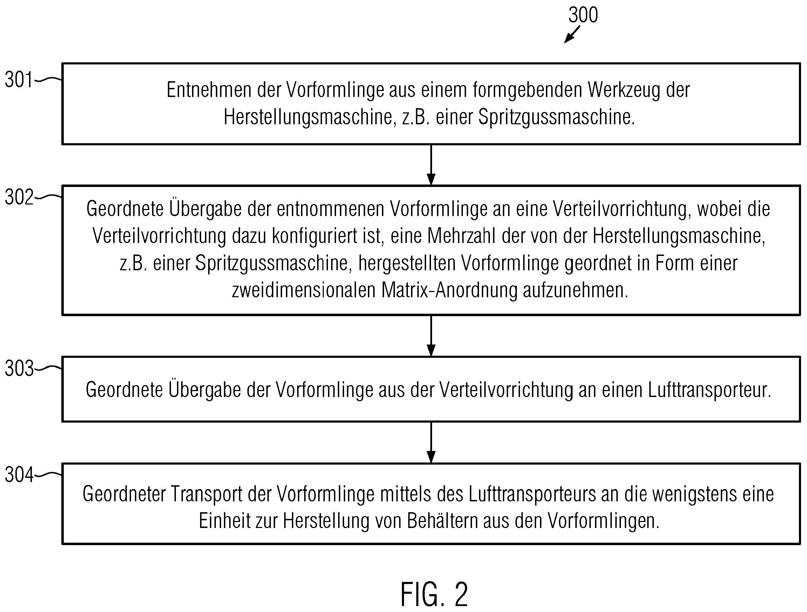

Die Fig. 2 zeigt ein beispielhaftes Flussdiagramm für ein beispielhaftes Verfahren 300 zur Handhabung von Vorformlingen in einer Behälterbehandlungsanlage zur Herstellung von Behältern, wobei die Behälterbehandlungsanlage einige oder alle der vorherig beschriebenen Merkmale aufweisen kann.

Das beispielhafte Verfahren 300 kann unter anderem dabei folgende Schritte umfassen:
- Ein (geordnetes) Entnehmen der Vorformlinge aus einem formgebenden Werkzeug der Herstellungsmaschine, z.B. einer Spritzgussmaschine.
- Eine geordnete Übergabe der entnommenen Vorformlinge an eine Verteilvorrichtung, wobei die Verteilvorrichtung dazu konfiguriert ist, eine Mehrzahl der von der Herstellungsmaschine, z.B. einer Spritzgussmaschine, hergestellten Vorformlinge geordnet in Form einer zweidimensionalen Matrix-Anordnung aufzunehmen.
- Eine geordnete Übergabe der Vorformlinge aus der Verteilvorrichtung an einen Lufttransporteur.
- Ein geordneter Transport der Vorformlinge mittels des Lufttransporteur an die wenigstens eine Einheit zur Herstellung von Behältern aus den Vorformlingen, z.B. eine Streckblasmaschine.

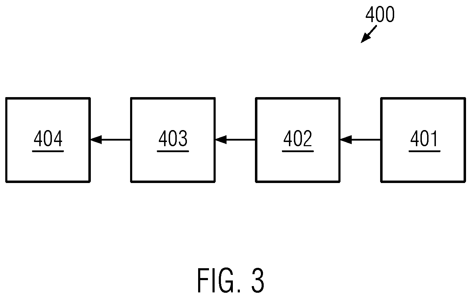

Die **Fig. 3** zeigt bespielhaft schematisch eine Behälterbehandlungsanlage 400 zur Herstellung von Behältern, umfassend: eine Herstellungsmaschine 401, z.B. eine Spritzgussmaschine, zum Herstellen von Vorformlingen, wenigstens eine Einheit 404 zur Herstellung von Behältern aus den Vorformlingen, wenigstens eine Verteilvorrichtung 402 zum geordneten Verteilen der von der Herstellungsmaschine 401, z.B. einer Spritzgussmaschine, hergestellten Vorformlinge, und wenigstens einen Lufttransporteur 403 zur geordneten Zufuhr der von der Herstellungsmaschine 401, z.B. einer Spritzgussmaschine, hergestellten Vorformlinge an die wenigstens eine Einheit 404 zur Herstellung von Behältern aus den Vorformlingen, und wobei die Verteilvorrichtung 402 dazu konfiguriert ist, eine Mehrzahl der von der Herstellungsmaschine, z.B. einer Spritzgussmaschine, hergestellten Vorformlinge geordnet in Form einer zweidimensionalen Matrix-Anordnung aufzunehmen und geordnet an den Lufttransporteur 403 zu übergeben.

Bei der bespielhaften Einheit 403 kann es sich beispielsweise um eine Streckblasmaschine handeln.

Es folgen die Figuren Fig. 1a, 1b, 2 und 3.

Die Bezugszeichen sind dabei wie folgt belegt.
100 Verteilvorrichtung
101, 102, 103, 104, 105, 106, 107 Modul bzw. Tragleiste bzw. Tragleistenmodul
108 Vorformlinge bzw. ausgegebene Vorformlinge
109 Vorformlinge bzw. aufgenommene Vorformlinge
110 Riemen bzw. umlaufender Riemen
111 Mitnehmer bzw. Mitnehmernocke
112 Antriebsrolle
113 Ausgang
114 Ausgang
115 Bahn oder Kanal oder Bahnkanal
116 Winkel zwischen Transportbewegungsrichtung der Vorformlinge und Bewegungsrichtung der Mitnehmer
117 Transportbewegungsrichtung der Vorformlinge
118 Bewegungsrichtung der Mitnehmer vom Riemen 110 des Transportmittels 119
119, 120, 121, 122, 123, 124, 125 Umlaufendes Transportmittel
126, 127, 128, 129, 130, 131, 132, 133 Bewegungsrichtung(en) der Antriebsrolle(n)
134 Geradliniges Bahnsegment
135 Kurvensegment der Bahn
136 Lufttransporteur
200 Verteilvorrichtung
201 Lufttransporteur
202 Bewegungsrichtung(en) der Verteilvorrichtung
203 Greifer
204 Greiforgan
205 Vorformling
206 Greiforgan
207, 208, 209, 210, 211, 212, 213, 214 Tragleiste bzw. Tragleistenmodul
215 Vorformlinge
216 automatische Handlingseinheit, z.B. Roboter
217 Zeile bzw. Spalte
218 Bewegungsrichtung von Tragleiste
219 Bewegungsrichtung von Tragleiste
220 Aufnahme oder Halterung, beispielhafte Ausbuchtung
221 Transportrichtung des Lufttransporteurs
222 Freigabeposition
223 Vorformlinge
224 Halteposition
300 Verfahren
301, 302, 303, 304 Verfahrensschritte
400 Behälterbehandlungsanlage
401 Herstellungsmaschine, z.B. Spritzgussmaschine
402 Verteilvorrichtung
403 Lufttransporteur
404 Einheit zur Herstellung von Behältern aus den Vorformlingen, z.B. Streckblasmaschine

## Patentansprüche

1. Behälterbehandlungsanlage (400) zur Herstellung von Behältern, umfassend:
eine Herstellungsmaschine (401) zum Herstellen von Vorformlingen, insbesondere eine Spritzgussmaschine,
wenigstens eine Einheit (404) zur Herstellung von Behältern aus den Vorformlingen,
wenigstens eine Verteilvorrichtung (402) zum geordneten Verteilen der von der Herstellungsmaschine hergestellten Vorformlinge,
wenigstens einen Lufttransporteur (403) zur geordneten Zufuhr der von der Herstellungsmaschine (401) hergestellten Vorformlinge an die wenigstens eine Einheit (404) zur Herstellung von Behältern aus den Vorformlingen,
wobei die Verteilvorrichtung (402) dazu konfiguriert ist, eine Mehrzahl der von der Herstellungsmaschine (401) hergestellten Vorformlinge geordnet in Form einer zweidimensionalen Matrix-Anordnung aufzunehmen und geordnet an den Lufttransporteur (403) zu übergeben, wobei die Verteilvorrichtung (402) wenigstens eine Bahn zum Transport der aufgenommenen Vorformlinge und wenigstens einen Ausgang aufweist, der zum Lufttransporteur (403) führt, **dadurch gekennzeichnet, dass** die Verteilvorrichtung (402) eine Mehrzahl von Tragleisten aufweist, welche die wenigstens eine Bahn festlegen, und wobei die Tragleisten so ausgeführt sind, dass die Vorformlinge mit ihren Tragringen in den Tragleisten hängend zum wenigstens einen Ausgang transportiert werden können.

2. Behälterbehandlungsanlage (400) nach Anspruch 1, wobei die Verteilvorrichtung (402) dazu konfiguriert ist, einen Teil der aufgenommenen Vorformlinge in einer Reihe geordnet an den Lufttransporteur (403) zu übergeben und wobei der Lufttransporteur (403) dazu konfiguriert ist, die von der Verteilvorrichtung (402) übernommenen Vorformlinge in einer Reihe geordnet zu der wenigstens einen Einheit (404) zur Herstellung von Behältern aus den Vorformlingen zu transportieren.

3. Behälterbehandlungsanlage (400) nach einem der vorherigen Ansprüche, wobei die Verteilvorrichtung (402) quer zur Transportrichtung des Lufttransporteurs (403) verschiebbar ist und/oder wobei der Lufttransporteur (403) ein aseptischer Lufttransporteur ist.

4. Behälterbehandlungsanlage (400) nach einem der vorherigen Ansprüche, wobei die Verteilvorrichtung (402) eine Vielzahl mechanisch antreibbarer Mitnehmer aufweist, welche dazu konfiguriert sind, die aufgenommenen Vorformlinge entlang der durch die Tragleisten festgelegten wenigstens einen Bahn zum wenigstens einen Ausgang der Verteilvorrichtung (402) zu transportieren.

5. Behälterbehandlungsanlage (400) nach dem vorherigen Anspruch, wobei die Verteilvorrichtung (402) ferner umlaufende Transportmittel umfasst, z.B. Transportbänder oder Transportketten oder Transportriemen, welche den Tragleisten zugeordnet sind und wobei die Mitnehmer zum Transport der Vorformlinge an den umlaufenden Transportmitteln angebracht sind.

6. Behälterbehandlungsanlage (400) nach einem der vorherigen Ansprüche, wobei die Verteilvorrichtung (402) dazu konfiguriert ist, ein Vielfaches der Anzahl der Vorformlinge, die pro Zyklus der Herstellungsmaschine (401) hergestellt werden können, gleichzeitig geordnet aufzunehmen und/oder wobei die Verteilvorrichtung (402) dazu konfiguriert ist, 50 bis 300 Vorformlinge gleichzeitig geordnet aufzunehmen.

7. Behälterbehandlungsanlage (400) nach einem der vorherigen Ansprüche, ferner umfassend wenigstens eine automatische Handlingseinheit, insbesondere ein Roboter, wobei die automatische Handlingseinheit, z.B. der/ein Roboter, wenigstens einen Greifer aufweist und der wenigstens eine Greifer dazu konfiguriert ist, Vorformlinge aus dem formgebenden Werkzeug der Herstellungsmaschine (401) zu entnehmen und an die Verteilvorrichtung (402) geordnet in Form der/einer zweidimensionalen Matrix-Anordnung zu übergeben.

8. Behälterbehandlungsanlage (400) nach einem der vorherigen Ansprüche, wobei die wenigstens eine Einheit (404) zur Herstellung von Behältern aus den Vorformlingen eine Einheit folgender Art ist: Einlaufeinheit einer Streckblasmaschine, Einlaufeinheit einer Heizstrecke, Fördereinheit, Einlauf einer Vorformlingsreinigungseinheit, Inspektionseinheit, Ausschussauffangeinheit.

9. Verfahren (300) zur Handhabung von Vorformlingen in einer Behälterbehandlungsanlage (400) zur Herstellung von Behältern nach einem der vorherigen Ansprüche 1 bis 8, umfassend:
ein Entnehmen (301) der Vorformlinge aus einem formgebenden Werkzeug der Herstellungsmaschine;
eine geordnete Übergabe (302) der entnommenen Vorformlinge an die Verteilvorrichtung
eine geordnete Übergabe (303) der Vorformlinge aus der Verteilvorrichtung an den Lufttransporteur; und einen geordneten Transport (304) der Vorformlinge mittels des Lufttransporteur an die wenigstens eine Einheit zur Herstellung von Behältern aus den Vorformlingen.

## Claims

1. A container treatment plant (400) for manufacturing containers, comprising:
a manufacturing machine (401) for manufacturing preforms, in particular an injection moulding machine,
at least one unit (404) for manufacturing containers from the preforms,
at least one distributing device (402) for distributing the preforms manufactured by the manufacturing machine in an ordered manner,
at least one air conveyor (403) for supplying the preforms manufactured by the manufacturing machine(401) to the at least one unit (404) for manufacturing containers from the preforms in an ordered manner,
wherein the distributing device (402) is configured to receive a plurality of the preforms manufactured by the manufacturing machine (401) in an ordered manner in the form of a two-dimensional matrix array and to transfer them to the air conveyor (403) in an ordered manner, wherein the distributing device (402) includes at least one track for transporting the received preforms and at least one outlet leading to the air conveyor (403) **characterized in that**
the distributing device (402) includes a plurality of support rails defining at least one track and wherein the support rails are configured such that the preforms can be transported to the at least one outlet suspended with their supporting rings in the support rails.

2. The container treatment plant (400) according to claim 1, wherein the distributing device (402) is configured to transfer part of the received preforms ordered in a row to the air conveyor (403) and wherein the air conveyor (403) is configured to transport the preforms received from the distributing device (402) ordered in a row to the at least one unit (404) for manufacturing containers from the preforms.

3. The container treatment plant (400) according to any one of the preceding claims, wherein the distributing device (402) can be moved transverse to the transport direction of the air conveyor (13) and/or wherein the air conveyor (403) is an aseptic air conveyor.

4. The container treatment plant (400) according to any one of the preceding claims, wherein the distributing device (402) includes a plurality of mechanically driveable drivers configured to transport the received preforms along the at least one track defined by the support rails to the at least one outlet of the distributing device (402).

5. The container treatment plant (400) according to any one of the preceding claims, wherein the distributing device (402) further comprises circulating transport means, for instance belt conveyors or transport chains or transport belts allocated to the support rails, and wherein the drivers are attached to the circulating transport means for transporting the preforms.

6. The container treatment plant (400) according to any one of the preceding claims, wherein the distributing device (402) is configured to simultaneously receive in an ordered manner many times the number of preforms that can be manufactured by the manufacturing machine (401) per cycle and/or wherein the distributing device (402) is configured to receive in particular 50 to 300 preforms simultaneously in an ordered manner.

7. The container treatment plant (400) according to any one of the preceding claims, further comprising at least one automatic handling unit, in particular a robot, wherein the automatic handling unit, for instance the/a robot comprises at least one gripper, and wherein the at least one gripper is configured to remove preforms from the forming tool of the manufacturing machine (401) and to transfer them to the distributing device (402) in an ordered manner in the form of the/a two-dimensional matrix array.

8. The container treatment plant (400) according to any one of the preceding claims, wherein the at least one unit (404) for manufacturing containers from the preforms is one of the following units: an inlet unit of a stretch blow molding machine, an inlet unit of a heating zone, a conveyor unit, an inlet of a preform cleaning unit, an inspection unit, a rejects collection unit.

9. A method (300) for handling preforms in a container treatment plant (400) for manufacturing containers according to any one of the preceding claims 1 to 8, comprising:
removing (301) the preforms from a forming tool of the manufacturing machine;
transferring (302) the removed preforms to the distributing device in an ordered manner;
transferring (303) the preforms from the distributing device to the air conveyor in an ordered manner; and
transporting (304) the preforms by means of the conveyor to the at least one unit for manufacturing containers from the preforms in an ordered manner.

## Revendications

1. Installation de traitement de récipients (400) permettant de produire des récipients, comprenant :
une machine de production (401) permettant de produire des préformes, en particulier une machine de moulage par injection,
au moins une unité (404) permettant de produire des récipients à partir des préformes, au moins un dispositif de répartition (402) permettant de répartir de manière ordonnée les préformes produites par la machine de production,
au moins un transporteur pneumatique (403) permettant d'alimenter de manière ordonnée les préformes produites par la machine de production (401) vers la au moins une unité (404) permettant de produire des récipients à partir des préformes,
dans lequel le dispositif de distribution (402) est configuré pour accueillir de manière ordonnée une pluralité de préformes produites par la machine de production (401) sous la forme d'un agencement matriciel bidimensionnel et les transmettre de manière ordonnée au transporteur pneumatique (403), dans lequel le dispositif de distribution (402) présente au moins une voie permettant de transporter les préformes accueillies et au moins une sortie menant au transporteur pneumatique (403), **caractérisée en ce que**
le dispositif de distribution (402) présente une pluralité de barres de support qui définissent la au moins une voie, et dans laquelle les barres de support sont conçues de sorte que les préformes peuvent être transportées en suspension dans les barres de support par leurs anneaux de support vers la au moins une sortie.

2. Installation de traitement de récipients (400) selon la revendication 1, dans laquelle le dispositif de distribution (402) est configuré pour transférer vers le transporteur pneumatique (403), de manière ordonnée en une rangée, une partie des préformes accueillies et dans laquelle le transporteur pneumatique (403) est configuré pour transporter les préformes reçues à partir du dispositif de distribution (402) de manière ordonnée en une rangée vers la au moins une unité (404) permettant de produire des récipients à partir des préformes.

3. Installation de traitement de récipients (400) selon l'une quelconque des revendications précédentes, dans laquelle le dispositif de distribution (402) peut être déplacé transversalement par rapport à la direction de transport du transporteur pneumatique (403) et/ou dans laquelle le transporteur pneumatique (403) est un transporteur pneumatique aseptique.

4. Installation de traitement de récipients (400) selon l'une quelconque des revendications précédentes, dans laquelle le dispositif de distribution (402) présente une pluralité d'entraîneurs pouvant être entraînés mécaniquement et configurés pour transporter les préformes accueillies le long de la au moins une voie définie par les barres de support vers au moins une sortie du dispositif de distribution (402).

5. Installation de traitement de récipients (400) selon la revendication précédente, dans laquelle le dispositif de distribution (402) comprend en outre des moyens de transport circulants, par exemple des bandes transporteuses ou des chaînes de transport ou des courroies de transport qui sont associés aux barres porteuses et dans laquelle les entraineurs sont fixés aux moyens de transport circulaires en vue du transport des préformes.

6. Installation de traitement de récipients (400) selon l'une quelconque des revendications précédentes, dans laquelle le dispositif de distribution (402) est configuré pour accueillir simultanément de manière ordonnée un multiple du nombre de préformes pouvant être produites par cycle de la machine de production (401) et/ou dans laquelle le dispositif de distribution (402) est configuré pour accueillir simultanément de manière ordonnée 50 à 300 préformes.

7. Installation de traitement de récipients (400) selon l'une quelconque des revendications précédentes, comprenant en outre au moins une unité de manipulation automatique, en particulier un robot, dans laquelle l'unité de manipulation automatique, par exemple le/un robot, comprend au moins une pince et la au moins une pince est configurée pour prélever des préformes à partir de l'outil de formage de la machine de production (401) et pour les transférer vers le dispositif de distribution (402) de manière ordonnée sous la forme d'un agencement matriciel bidimensionnel.

8. Installation de traitement de récipients (400) selon l'une quelconque des revendications précédentes, dans laquelle la au moins une unité (404) permettant de produire des récipients à partir des préformes est une unité du type ci-dessous : unité d'entrée d'une machine d'étirage-soufflage, unité d'entrée d'une section de chauffage, unité de transport, entrée d'une unité de nettoyage de préforme, unité d'inspection, unité de collecte des déchets.

9. Procédé (300) de manipulation de préformes dans une installation de traitement de récipients (400) pour la production de récipients selon l'une quelconque des revendications précédentes 1 à 8, comprenant :
un prélèvement (301) des préformes à partir d'un outil de formage de la machine de production ;
un transfert ordonné (302) des préformes prélevées vers le dispositif de distribution ;
un transfert ordonné (303) des préformes issues du dispositif de distribution vers le transporteur pneumatique ; et un transport ordonné (304) des préformes au moyen du transporteur pneumatique vers la au moins une unité permettant de produire des récipients à partir des préformes.
